(19) Europäisches Patentamt
European Patent Office
Office européen des brevets

(11) **EP 3 910 014 B1**

(12) **EUROPEAN PATENT SPECIFICATION**

(45) Date of publication and mention of the grant of the patent:
**25.06.2025 Bulletin 2025/26**

(21) Application number: **21173259.9**

(22) Date of filing: **11.05.2021**

(51) International Patent Classification (IPC):
***C08K 5/25*** *(2006.01)*

(52) Cooperative Patent Classification (CPC):
(C-Sets available)
**C08K 5/25;** C08K 2201/014 (Cont.)

# (54) POLYACETAL RESIN COMPOSITION

POLYACETALHARZZUSAMMENSETZUNG

COMPOSITION DE RÉSINE DE POLYACÉTAL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.05.2020 JP 2020083991**

(43) Date of publication of application:
**17.11.2021 Bulletin 2021/46**

(73) Proprietor: **Asahi Kasei Kabushiki Kaisha**
**Tokyo 1000006 (JP)**

(72) Inventor: **Osaka, Miki**
**Chiyoda-ku, 100-0006 (JP)**

(74) Representative: **Hoffmann Eitle**
**Patent- und Rechtsanwälte PartmbB**
**Arabellastraße 30**
**81925 München (DE)**

(56) References cited:
**EP-A1- 2 098 569 JP-A- 2012 233 129**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



**(Cont. next page)**

(52) Cooperative Patent Classification (CPC): (Cont.)

C-Sets
**C08K 5/25, C08L 59/02;**
**C08K 5/25, C08L 59/04**

## Description

TECHNICAL FIELD

This disclosure relates to a polyacetal resin composition.

BACKGROUND

Polyacetal resins are materials that are excellent in rigidity, strength, tenacity, sliding property, and creep property. Polyacetal resins have been used over a wide range as resin materials for various mechanical members such as automobile members, electric or electronic members, and industrial members.

Polyacetal resins form formaldehyde when they are decomposed by the action of heat, light, oxygen, acid, base and the like. In particular, there is concern that formaldehyde gas generated by thermal decomposition during manufacturing or molding may deteriorate the working environment, and that formaldehyde gas generated from resin products may deteriorate the indoor environment.

A known example of methods of suppressing the generation of formaldehyde from polyacetal resins is a method of adding a hydrazide compound (JP H04-345648 A (PTL 1)).

However, a polyacetal resin composition containing a hydrazide compound is likely to form mold deposits. The generation of mold deposits lowers the work efficiency and causes the deterioration of surface conditions of a molded product.

Disclosed methods of using a hydrazide compound to suppress the amount of formaldehyde emissions while also reducing mold deposits include a method of using a long-chain aliphatic hydrazide compound or an alicyclic hydrazide compound (WO 2005/033200 (PTL 2)), a method of using a monohydrazide compound and a dihydrazide compound together (JP 2012-233129 A (PTL 3) and JP 2014-009309 A (PTL 4)), and a method of using two different dihydrazide compounds together (JP 2010-155972 A (PTL 5)). EP 2 098 569 A discloses methods of using various types of hydrazide compounds to suppress the amount of formaldehyde emissions without specific focus on mold deposits.

CITATION LIST

Patent Literature

- PTL 1: JP H04-345648 A
- PTL 2: WO 2005/033200
- PTL 3: JP 2012-233129 A
- PTL 4: JP 2014-009309 A
- PTL 5: JP 2010-155972 A

SUMMARY

(Technical Problem)

However, the methods described in PTLs 1 to 5 above may not sufficiently suppress the amount of formaldehyde emissions and may cause mold deposits.

Accordingly, the present disclosure is made in light of the problems set forth above and aims to provide a polyacetal resin composition in which the amount of formaldehyde emissions and mold deposits are sufficiently suppressed.

(Solution to Problem)

We have found that both the amount of formaldehyde emissions and mold deposits can be reduced by mixing fatty acid monohydrazide compounds having different chain lengths, preferably in a specific ratio, and blending them with a polyacetal resin, and have completed the present disclosure.

We thus provide a polyacetal resin composition as defined in claims 1-9.

According to the present disclosure, it is possible to provide a polyacetal resin composition in which both the amount of formaldehyde emissions and mold deposits are reduced.

DETAILED DESCRIPTION

The following describes an embodiment of the present disclosure (hereinafter, simply referred to as "present embodiment") in detail.

<Polyacetal resin composition>

A polyacetal resin composition of the present embodiment contains (A) polyacetal resin and (B) fatty acid monohydrazide.

The following describes each component constituting the polyacetal resin composition of the present embodiment in detail.

<(A) Polyacetal resin>

The (A) polyacetal resin (hereinafter, may be simply referred to as "component (A)") contained in the polyacetal resin composition of the present embodiment has a repeating oxymethylene unit represented by $(-CH_2O-)$ (acetal structure) as a main constituent unit, and known ones may be used. The (A) polyacetal resin used in the present embodiment may be a homopolymer composed of only the oxymethylene unit, and may be a copolymer (including a block copolymer) or a terpolymer containing a constituent unit other than the oxymethylene unit. Further, it may have a branched or crosslinked structure as well as a linear structure.

The(A) polyacetal resin may be used alone or in combination of two or more.

The (A) polyacetal resin preferably contains 30 mass% to 100 mass%, more preferably 50 mass% to 100 mass%, and still more preferably 70 mass% to 100 mass% of polyacetal copolymer, with the total amount of the (A) polyacetal resin being 100 mass%.

A known method may be used to produce the (A) polyacetal resin of the present embodiment.

For example, a polyacetal homopolymer can be obtained by homopolymerizing a formaldehyde monomer or a cyclic oligomer of formaldehyde such as a trimer (trioxane) and a tetramer (tetraoxane) thereof. Further, the obtained polyacetal homopolymer can be stabilized with a known method (for example, a method of reacting the polymerization terminal with an ether group or an ester group).

The main chain of the polyacetal homopolymer consists substantially only of oxymethylene unit. That is, it is preferable to contain 99 mass% or more of oxymethylene unit.

In the polyacetal copolymer, a constituent unit (copolymer unit) other than the oxymethylene unit is preferably an oxyethylene unit $(-CH_2CH_2O-)$.

Such a polyacetal copolymer can be obtained by copolymerizing a formaldehyde monomer or a cyclic oligomer of formaldehyde such as a trimer (trioxane) and a tetramer (tetraoxane) thereof, with a cyclic ether such as ethylene oxide or 1,3-dioxolane. In a case where a polyacetal copolymer is obtained from trioxane and 1,3-dioxolane, it is preferable to use 0.1 mol% to 60 mol%, more preferably 0.1 mol% to 20 mol%, and still more preferably 0.13 mol% to 10 mol% of 1,3-dioxolane with respect to 100 mol% of trioxane. Further, the obtained polyacetal copolymer can be stabilized with a known method (for example, a method of melting the polyacetal copolymer in combination with a quaternary ammonium compound to decompose an unstable terminal portion).

The polyacetal copolymer preferably contains 1 mass% to 10 mass%, more preferably 1 mass% to 5 mass%, and still more preferably 1 mass% to 3 mass% of oxyethylene unit in the entire main chain of the polymer.

The melt flow rate (MFR) of the (A) polyacetal resin of the present embodiment is preferably 2 g/10 minutes to 50 g/10 minutes, more preferably 2 g/10 minutes to 30 g/10 minutes, and still more preferably 5 g/10 minutes to 15 g/10 minutes from the viewpoint of achieving both fluidity and strength.

Note that the MFR can be measured under the conditions of 190 °C and a load of 2.16 kg in accordance with ISO 1133-1.

In the present embodiment, the content of the (A) polyacetal resin in 100 mass% of the polyacetal resin composition is preferably 80 mass% or more, more preferably 90 mass% or more, and still more preferably 95 mass% or more.

<(B) Fatty acid monohydrazide>

The (B) fatty acid monohydrazide contained in the polyacetal resin composition of the present embodiment contains at least (B1) one type of fatty acid monohydrazide having 18 to 42 carbon atoms represented by the following general formula (1) and (B2) one type of fatty acid monohydrazide having 3 to 17 carbon atoms represented by the following general formula (1). (Hereinafter, the (B) fatty acid monohydrazide, (B1) fatty acid monohydrazide having 18 to 42 carbon atoms represented by the following general formula (1), and (B2) fatty acid monohydrazide having 3 to 17 carbon

atoms represented by the following general formula (1) may be simply referred to as "component (B)", "component (B1)", and "component (B2)", respectively.)

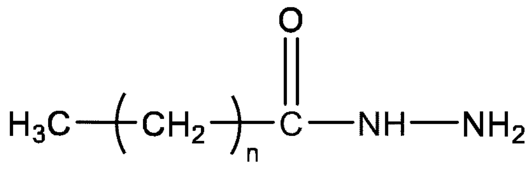

(1)

(where n is an integer of 16 to 40 in the case of the component (B1), and n is an integer of 1 to 15 in the case of the component (B2).)

In the present embodiment, the mass ratio (B1):(B2) of the component (B1) to the component (B2) is preferably 99.99:0.01 to 65:35. When the mass ratio (B1):(B2) is in this range, it is possible to suppress the generation of formaldehyde and the generation of mold deposits in a molded product obtained by molding the polyacetal resin composition of the present embodiment.

The mass ratio (B1):( B2) is more preferably 99.99: 0.01 to 90:10, and still more preferably 99.99: 0.01 to 99: 1. When the mass ratio (B1): (B2) is in this range, the amount of formaldehyde emissions from a molded product obtained by molding the polyacetal resin composition of the present embodiment can be suppressed, particularly in a humid atmosphere.

In the polyacetal resin composition of the present embodiment, the content of the (B) fatty acid monohydrazide is 0.05 parts by mass to 5 parts by mass with respect to 100 parts by mass of the (A) polyacetal resin. When the content of the (B) fatty acid monohydrazide is less than 0.05 parts by mass, the suppression of formaldehyde generation tends to be insufficient, and when the content exceeds 5 parts by mass, it cannot be sufficiently kneaded at the time of extrusion, and the fatty acid monohydrazide tends to flow out to water for cooling strands.

The content of the (B) fatty acid monohydrazide is preferably 0.05 parts by mass to 1 part by mass and more preferably 0.05 parts by mass to 0.7 parts by mass with respect to 100 parts by mass of the (A) polyacetal resin.

The component (B1) in the present embodiment is represented by the above general formula (1), where n is an integer of 16 to 40, preferably an integer of 16 to 20, and more preferably 16.

Specific examples of the component (B1) include stearic acid hydrazide, arachidic acid hydrazide, behenic acid hydrazide, lignoceric acid hydrazide, cerotic acid hydrazide, montanic acid hydrazide, and melissic acid hydrazide. Among these, stearic acid hydrazide, arachidic acid hydrazide, and behenic acid hydrazide are preferable, and stearic acid hydrazide is more preferable.

The component (B1) may be used alone or in combination of two or more.

The component (B2) in the present embodiment is represented by the above general formula (1), where n is an integer of 1 to 15, preferably 1 or an integer of 10 to 15, and more preferably 14.

Specific examples of the component (B2) include propionic acid hydrazide, butyric acid hydrazide, valeric acid hydrazide, caproic acid hydrazide, heptyl acid hydrazide, caprylic acid hydrazide, pelargonic acid hydrazide, capric acid hydrazide, lauric acid hydrazide, myristic acid hydrazide, palmitic acid hydrazide, and margaric acid hydrazide. Among these, propionic acid hydrazide, lauric acid hydrazide, myristic acid hydrazide, palmitic acid hydrazide, and margaric acid hydrazide are preferable, and palmitic acid hydrazide is more preferable.

The component (B2) may be used alone or in combination of two or more.

<(C) Fatty acid dihydrazide>

The polyacetal resin composition of the present embodiment may further contain (C) fatty acid dihydrazide represented by the following general formula (2) (hereinafter, may be simply referred to as "component (C)").

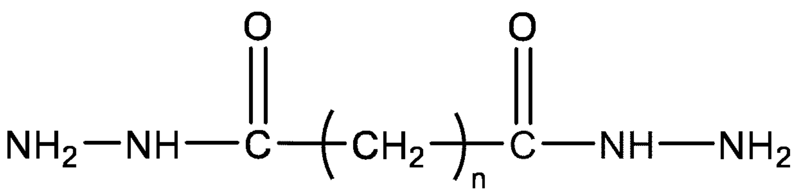

(2)

(where n is an integer of 1 to 40.)

The (C) fatty acid dihydrazide in the present embodiment is represented by the above general formula (2), where n is an integer of 1 to 40, preferably an integer of 1 to 20, more preferably 1 to 15, and still more preferably 4 to 10.

Specific examples of the (C) fatty acid dihydrazide include adipic acid dihydrazide, sebacic acid dihydrazide, and dodecane diacid dihydrazide. Among these, sebacic acid dihydrazide and dodecane diacid dihydrazide are preferable, and sebacic acid dihydrazide is more preferable.
The (C) fatty acid dihydrazide may be used alone or in combination of two or more.
In the polyacetal resin composition of the present embodiment, the content of the (C) fatty acid dihydrazide is preferably 0.01 parts by mass to 5 parts by mass, more preferably 0.01 parts by mass to 0.5 parts by mass, and still more preferably 0.01 parts by mass to 0.15 parts by mass with respect to 100 parts by mass of the (A) polyacetal resin. When the content of the (C) fatty acid dihydrazide is in the above ranges, the amount of formaldehyde emissions in a dry atmosphere can be further suppressed.
The mass ratio (B):(C) of the (B) fatty acid monohydrazide to the (C) fatty acid dihydrazide in the present embodiment is preferably 99:1 to 51:49. When the (C) fatty acid dihydrazide is contained in the mass ratio (B):(C) in the above range, mold deposits can be further suppressed.
The mass ratio (B):(C) is more preferably 95:5 to 51:49, and still more preferably 90:10 to 51:49. When the mass ratio (B):(C) is in the above ranges, the amount of formaldehyde emissions in a dry atmosphere can be particularly reduced.
A conventionally known additive can be added to the polyacetal resin composition of the present embodiment, if necessary. Examples of the additive include an aging improver such as fatty acid metal salts, a sliding agent, a weather resistant agent, a light resistant agent, a release agent, a nucleating agent, a coloring agent, an organic or inorganic reinforcing agent, and various thermoplastic elastomers.
The content of the additive is preferably 15 mass% or less with respect to 100 mass% of the polyacetal resin composition.
The polyacetal resin composition of the present embodiment can be produced with a known melt-kneading method. For example, the (A) polyacetal resin, the (B) fatty acid monohydrazide, and, if necessary, the (C) fatty acid dihydrazide may be mixed by a stirrer such as a Henschel mixer, and the mixture may be supplied to a single-screw or twin-screw melt-kneading device (extruder) for melt-kneading. In addition, the (A) polyacetal resin may be supplied in the upstream side of a single-screw or twin-screw extruder and melted, and then the (B) fatty acid monohydrazide and, if necessary, the (C) fatty acid dihydrazide may be supplied in the downstream side and melt-kneaded.
A molded product can be obtained by molding the polyacetal resin composition of the present embodiment.
The method of molding the polyacetal resin composition is not particularly limited, and known molding methods such as extrusion molding, injection molding, vacuum molding, blow molding, injection compression molding, decoration molding, dual injection molding, gas-assisted injection molding, foam injection molding, low-pressure molding, ultrathin injection molding (ultrahigh-speed injection molding), in-mold composite molding (insert molding and outsert molding), and melt blow molding may be used.
The shape of the molded product is not particularly limited, and it may be, for example, an injection-molded product, a fiber or nonwoven fabric, a sheet or film, a deformed extruded product, or the like.
The use of the molded product is not particularly limited. For example, it may be used for mechanical members typified by gears, cams, sliders, levers, axes, bearings, guides and the like; resin members of outsert molding; resin members of insert molding (chassis, trays, side plates); members for printers or copiers; members for digital camera or digital video equipment; members for music, video or information equipment; members for communication equipment; members for electric equipment; and members for electronic equipment.
Further, the molded product can be suitably used as an automobile member in members around fuel typified by gasoline tanks, fuel pump modules, valves, gasoline tank flanges and the like; members around doors; peripheral members of seatbelts; combination switch members; and switches.
Moreover, the molded product also can be suitably used as an industrial member typified by house equipment.

## EXAMPLES

The following describes the present disclosure in more detail with reference to Examples and Comparative Examples, yet the present disclosure is not limited thereto.
The raw material components used in Examples and Comparative Examples are as follows.

(A) Polyacetal resin

(A-1) Polyacetal homopolymer obtained by polymerizing trioxane (MFR = 2.8 g/10 minutes)
(A-2) Polyacetal copolymer obtained by copolymerizing trioxane and 1,3-dioxolane (4.2 mol of oxyethylene unit with respect to 100 mol of oxymethylene unit) (MFR = 9.0 g/10 minutes)

The MFR value was measured according to ISO 1133-1 using a MELT INDEXER manufactured by Toyo Seiki Co., Ltd. at a cylinder temperature of 190 °C and a load of 2.16 kg.

(B) Fatty acid monohydrazide

The following fatty acid monohydrazides were synthesized, mixed at the ratio listed in Table 1, and used.

(B1) Fatty acid monohydrazide having 18 to 42 carbon atoms
(B1-1) Stearic acid hydrazide
(B1-2) Behenic acid hydrazide
(B2) Fatty acid monohydrazide having 3 to 17 carbon atoms
(B2-1) Palmitic acid hydrazide
(B2-2) Myristic acid hydrazide
(B2-3) Propionic acid hydrazide

The method of synthesizing each fatty acid monohydrazide is as follows.

[Method of synthesizing fatty acid monohydrazide]

Synthesis of (B1-1) stearic acid hydrazide

First, 50 g of methyl stearate (manufactured by FUJIFILM Wako Pure Chemical Corporation) was added to a three-outlet flask equipped with a reflux condenser, a thermometer and a stirrer and stirred in a warm bath of 80 °C until it was completely melted. Then, 21 g (2.5 equivalents) of 60 %-hydrazine monohydrate (manufactured by Tokyo Chemical Industry Co., Ltd.) was added dropwise thereto, and the mixture was heated and stirred for 1 hour to obtain 47 g of stearic acid hydrazide.

Synthesis of (B1-2) behenic acid hydrazide, (B2-1) palmitic acid hydrazide, (B2-2) myristic acid hydrazide, and (B2-3) propionic acid hydrazide

The (B1-2) behenic acid hydrazide, (B2-1) palmitic acid hydrazide, (B2-2) myristic acid hydrazide, and (B2-3) propionic acid hydrazide were obtained in the same manner as for the (B1-1) except that the methyl stearate was changed to methyl behenate, methyl palmitate, methyl myristate, and methyl propionate (all manufactured by Tokyo Chemical Industry Co., Ltd.), respectively.

Each of the synthesized fatty acid monohydrazides was dissolved in HFIP to a concentration of 5 mg/mL, and it was confirmed by GC/MS measurement that the purity was 99.95 % or more in terms of peak area ratio.

The GC/MS measurement used HP6890/5973 manufactured by Agilent, and DB-1 manufactured by Agilent was used as the column.

(B') Aromatic monohydrazide
(B'1) Benzohydrazide (manufactured by Tokyo Chemical Industry Co., Ltd.)

The (B) fatty acid monohydrazide and the (B') aromatic monohydrazide were mixed at the ratio listed in Table 1 and used.

Table 1

| | | | | b1 | b2 | b3 | b4 | b5 | b6 | b7 | b8 | b9 | b10 | b11 | b12 | b13 | b14 | b15 | b'1 | b'2 | b'3 |
|---|---|---|---|---|---|---|---|---|---|---|---|---|---|---|---|---|---|---|---|---|---|
| (B) Fatty acid monohydrazide | Component (B1) | (B1-1) | mass% | 99.99 | 99.9 | 99.5 | 99 | 90 | 65 | 45 | 30 | 10 | 99 | 99 | | | 99 | 99 | 100 | | 99 |
| | | (B1-2) | mass% | | | | | | | | | | | | 99 | 99 | 0.5 | | | | |
| | Component (B2) | (B2-1) | mass% | 0.01 | 0.1 | 0.5 | 1 | 10 | 35 | 55 | 70 | 90 | | | 1 | | 0.5 | 0.5 | | 100 | |
| | | (B2-2) | mass% | | | | | | | | | | 1 | | | 1 | | 0.5 | | | |
| | | (B2-3) | mass% | | | | | | | | | | | 1 | | | | | | | |
| (B') Aromatic monohydrazide | | (B'1) | mass% | | | | | | | | | | | | | | | | | | 1 |

(C) Fatty acid dihydrazide

(C-1) Dodecane diacid dihydrazide (manufactured by Tokyo Chemical Industry Co., Ltd.)
(C-2) Sebacic acid dihydrazide (manufactured by Tokyo Chemical Industry Co., Ltd.)
(C-3) Adipic acid dihydrazide (manufactured by Tokyo Chemical Industry Co., Ltd.)

were used.

The measurement method and evaluation method used for Examples and Comparative Examples are as follows.

(1) Amount of formaldehyde emissions in a dry atmosphere

Test pieces (in a flat-plate shape of 100 mm × 100 mm × 3 mm) were molded from the polyacetal resin compositions obtained in Examples and Comparative Examples under conditions of a mold temperature of 80 °C, a cylinder temperature of 220 °C, an injection pressure of 35 MPa, an injection time of 15 seconds, and a cooling time of 20 seconds, using an injection molding machine (IS-100GN manufactured by Toshiba Machine Co., Ltd.)

The test piece and 5 L of nitrogen were placed in a sampling bag with a two-way cock (smart bag PA having a capacity of 10 L manufactured by GL Sciences Inc.) and sealed. After heating the sampling bag at 65 °C for 2 hours, 4 L of the gas inside the sampling bag was extracted through a DNPH cartridge (InertSep mini AERO DNPH manufactured by GL Sciences Inc.) at a rate of 400 mL/min, and formaldehyde in the gas was collected. Then, the formaldehyde-DNPH in the DNPH cartridge was eluted with acetonitrile, the concentration of formaldehyde-DNPH of the eluate was determined by means of HPLC with a calibration curve method using a standard substance of formaldehyde-DNPH, and the amount of formaldehyde emissions per unit mass of the test piece (μg/g) was calculated. The smaller the value is, the more the amount of formaldehyde emissions is suppressed, which is preferable.

(2) Amount of formaldehyde emissions in a humid atmosphere

Test pieces (in a flat-plate shape of 100 mm × 40 mm × 3 mm) were molded from the polyacetal resin compositions obtained in Examples and Comparative Examples under conditions of a mold temperature of 80 °C, a cylinder temperature of 220 °C, an injection pressure of 35 MPa, an injection time of 15 seconds, and a cooling time of 20 seconds, using an injection molding machine (IS-100GN manufactured by Toshiba Machine Co., Ltd.)

The amount of formaldehyde emissions from the test piece was measured according to a method described in the German Association of the Automotive Industry Standard VDA275. Specifically, the test piece was hung in a 1 L polyethylene bottle containing 50 mL of distilled water so as not to come into contact with the distilled water, and the bottle was sealed. The bottle was heated at 60 °C for 3 hours and allowed to stand at room temperature for 60 minutes. Formaldehyde in the distilled water was reacted with acetylacetone in the presence of ammonium ions, and the reactant was measured with UV spectrometer with the wavelength of 412 nm. Note that the amount of formaldehyde emissions (μg/g) was indicated as an amount of formaldehyde with respect to 1 g of the polyacetal resin. The smaller the value is, the more the amount of formaldehyde emissions is suppressed, which is preferable.

(3) Mold deposit property

Pellets of the polyacetal resin compositions obtained in Examples and Comparative Examples were subjected to continuous molding to obtain molded products (in an arrowhead shape of 30 mm × 12 mm × 2 mm), and the presence or absence of mold deposits (MD) was confirmed after 100, 500, and 1000 shots.

The presence or absence of mold deposits was observed in a direction perpendicular to the surface on the fixed side of the mold. When no MD was observed, it was evaluated as "good"; when any colorless MD was observed, it was evaluated as "poor"; when an interference color (interference fringes) was observed (it was presumed that the MD had a thickness of about 200 nm or more), it was evaluated as "inferior". The larger the number of molding shots is until mold deposits are observed, the more the mold deposits are suppressed, which is preferable.

The molding was performed under conditions of a mold setting temperature of 60 °C, a cylinder temperature of 200 °C, an injection pressure of 34 MPa, an injection time of 20 seconds, and a cooling time of 15 seconds, using an injection molding machine (Ti-30G manufactured by Toyo Seiki Co., Ltd.).

(4) Discoloration due to retention

Pellets of the polyacetal resin compositions obtained in Examples and Comparative Examples were retained in a cylinder of an injection molding machine (IS-100GN manufactured by Toshiba Machine Co., Ltd.) in a molten state for 30 minutes, and then the pellets were injection-molded into flat plates of 100 mm × 100 mm × 3 mm under injection conditions of an injection pressure of 35 MPa, an injection time of 15 seconds, and a cooling time of 20 seconds. The cylinder setting

temperature was 205 °C, and the mold temperature was 90 °C.

The color tone of the central part of the obtained molded plate was measured by Lab color system using a color-difference meter (CR-200 manufactured by KONICA MINOLTA, INC.), and the color difference ΔE from a blank (molded plate obtained by normal molding without retention) was calculated according to the following formula. The lower the ΔE value is, the more the discoloration due to retention is suppressed, which is preferable.

$$\Delta E = \sqrt{(L - L_{Blank})^2 + (a - a_{Blank})^2 + (b - b_{Blank})^2}$$

(where the values of the blank measured by the color-difference meter are $L_{Blank}$, $a_{Blank}$ and $b_{Blank}$, and the values of the molded plate measured after retention are L, a and b.)

[Examples 1 to 30 and Comparative Examples 1 to 11]

Each component was mixed so as to have the chemical composition listed in Tables 2 and 3, supplied to a twin-screw extruder (PCM30 manufactured by IKEGAI), melt-kneaded under the conditions of a screw rotation speed of 60 rpm and a cylinder setting temperature of 200 °C, and then pelletized. The obtained pellets were dried for 3 hours using a hot-air dryer at a temperature of 80 °C.

The evaluation results are summarized in Tables 2 and 3.

In Comparative Example 6, the polyacetal resin and the fatty acid monohydrazide were not sufficiently kneaded, and an oil film was formed on the water bath for cooling the strands. As a result, extrusion could not be performed (the materials could not be extruded).

Table 2-1

| | | | Example | | | | | | | Comparative Example | | Example | | | | | | Comparative Example | |
|---|---|---|---|---|---|---|---|---|---|---|---|---|---|---|---|---|---|---|---|
| | | | 1 | 2 | 3 | 4 | 5 | 6 | 7 | 1 | 2 | 8 | 9 | 10 | 11 | 12 | 13 | 3 | 4 |
| (A) Polyacetal resin | (A-1) | part by mass | 100 | 100 | 100 | 100 | 100 | 100 | 100 | 100 | 100 | | | | | | | | |
| | (A-2) | part by mass | | | | | | | | | | 100 | 100 | 100 | 100 | 100 | 100 | 100 | 100 |
| (B) Fatty acid monohydrazide | b1 | part by mass | | | | | | | | | | 0.15 | | | | | | | |
| | b2 | part by mass | 0.25 | | | | | | | | | | 0.15 | | | | | | |
| | b3 | part by mass | | | | | | | | | | | | 0.15 | | | | | |
| | b4 | part by mass | | 0.25 | | | | | | | | | | | 0.15 | | | | |
| | b5 | part by mass | | | 0.25 | | | | | | | | | | | 0.15 | | | |
| | b6 | part by mass | | | | 0.25 | | | | | | | | | | | 0.15 | | |
| | b7 | part by mass | | | | | 0.25 | | | | | | | | | | | | |
| | b8 | part by mass | | | | | | 0.25 | | | | | | | | | | | |
| | b9 | part by mass | | | | | | | 0.25 | | | | | | | | | | |
| | b10 | part by mass | | | | | | | | | | | | | | | | | |
| | b11 | part by mass | | | | | | | | | | | | | | | | | |
| | b12 | part by mass | | | | | | | | | | | | | | | | | |
| | b13 | part by mass | | | | | | | | | | | | | | | | | |
| | b14 | part by mass | | | | | | | | | | | | | | | | | |
| | b15 | part by mass | | | | | | | | | | | | | | | | | |
| Component (B1) only | b'1 | part by mass | | | | | | | | 0.25 | | | | | | | | 0.15 | |
| Component (B2) only | b'2 | part by mass | | | | | | | | | 0.25 | | | | | | | | 0.15 |
| Mixture of (B1) and (B') | b'3 | part by mass | | | | | | | | | | | | | | | | | |
| Amount of formaldehyde emissions (dry atmosphere) | | µg/g | 0.027 | 0.025 | 0.020 | 0.020 | 0.022 | 0.025 | 0.028 | 0.039 | 0.047 | 0.020 | 0.016 | 0.017 | 0.019 | 0.021 | 0.025 | 0.030 | 0.037 |
| Amount of formaldehyde emissions (humid atmosphere) | | µg/g | 0.26 | 0.23 | 0.20 | 0.21 | 0.22 | 0.23 | 0.29 | 0.35 | 0.41 | 0.12 | 0.11 | 0.10 | 0.15 | 0.17 | 0.25 | 0.30 | 0.42 |
| Mold deposit property | 100 shots | - | Good | Good | Good | Good | Good | Good | Good | Good | Good | Good | Good | Good | Good | Good | Good | Good | Good |
| | 500 shots | - | Good | Good | Good | Good | Good | Good | Good | Good | Good | Good | Good | Good | Good | Good | Good | Good | Good |
| | 1000 shots | - | Good | Good | Good | Good | Poor | Poor | Poor | Inferior | Inferior | Good | Good | Good | Good | Good | Good | Inferior | Inferior |
| Discoloration due to retention (ΔE) | | - | 0.3 | 0.2 | 0.1 | 0.1 | 0.1 | 0.1 | 0.2 | 0.5 | 0.5 | 0.3 | 0.1 | 0.1 | 0.1 | 0.1 | 0.1 | 0.4 | 0.4 |

Table 2-2

| | | | Example | | | | Comparative Example | | Example | | | | | | Comparative Example |
|---|---|---|---|---|---|---|---|---|---|---|---|---|---|---|---|
| | | | 14 | 15 | 16 | 17 | 5 | 6 | 18 | 19 | 20 | 21 | 22 | 23 | 7 |
| (A) Polyacetal resin | (A-1) | part by mass | | | | | | | | | | | | | |
| | (A-2) | part by mass | 100 | 100 | 100 | 100 | 100 | 100 | 100 | 100 | 100 | 100 | 100 | 100 | 100 |
| (B) Fatty acid monohydrazide | b1 | part by mass | | | | | | | | | | | | | |
| | b2 | part by mass | | | | | | | | | | | | | |
| | b3 | part by mass | 0.1 | 0.5 | 0.7 | 1 | 0.01 | 6 | | | | | | | |
| | b4 | part by mass | | | | | | | | | | | | | |
| | b5 | part by mass | | | | | | | | | | | | | |
| | b6 | part by mass | | | | | | | | | | | | | |
| | b7 | part by mass | | | | | | | | | | | | | |
| | b8 | part by mass | | | | | | | | | | | | | |
| | b9 | part by mass | | | | | | | | | | | | | |
| | b10 | part by mass | | | | | | | 0.15 | | | | | | |
| | b11 | part by mass | | | | | | | | 0.15 | | | | | |
| | b12 | part by mass | | | | | | | | | 0.15 | | | | |
| | b13 | part by mass | | | | | | | | | | 0.15 | | | |
| | b14 | part by mass | | | | | | | | | | | 0.15 | | |
| | b15 | part by mass | | | | | | | | | | | | 0.15 | |
| Component (B1) only | b'1 | part by mass | | | | | | | | | | | | | |
| Component (B2) only | b'2 | part by mass | | | | | | | | | | | | | |
| Mixture of (B1) and (B') | b'3 | part by mass | | | | | | | | | | | | | 0.15 |
| Amount of formaldehyde emissions (dry atmosphere) | | μg/g | 0.029 | 0.016 | 0.017 | 0.018 | 0.500 | could not be extruded | 0.02 | 0.028 | 0.026 | 0.029 | 0.021 | 0.02 | 0.075 |
| Amount of formaldehyde emissions (humid atmosphere) | | μg/g | 0.21 | 0.10 | 0.09 | 0.09 | 2.10 | | 0.16 | 0.2 | 0.21 | 0.25 | 0.19 | 0.16 | 0.53 |
| Mold deposit property | 100 shots | – | Good | Good | Good | Good | Good | | Good | Good | Good | Good | Good | Good | Inferior |
| | 500 shots | – | Good | Good | Good | Good | Good | | Good | Good | Good | Good | Good | Good | Inferior |
| | 1000 shots | – | Good | Good | Good | Poor | Good | | Good | Poor | Good | Good | Good | Good | Inferior |
| Discoloration due to retention (ΔE) | | – | 0.1 | 0.1 | 0.1 | 0.2 | 4.5 | | 0.1 | 0.1 | 0.1 | 0.1 | 0.1 | 0.1 | 1.3 |

Table 3

| | | | Example | | | | | | | Comparative Example | | | |
|---|---|---|---|---|---|---|---|---|---|---|---|---|---|
| | | | 24 | 25 | 26 | 27 | 28 | 29 | 30 | 8 | 9 | 10 | 11 |
| (A) Polyacetal resin | (A-2) | part by mass | 100 | 100 | 100 | 100 | 100 | 100 | 100 | 100 | 100 | 100 | 100 |
| (B) Fatty acid monohydrazide | b3 | part by mass | 0.120 | 0.060 | 0.055 | 0.050 | 0.120 | 0.05 | 0.075 | | | | |
| Component (B1) only | b'1 | part by mass | | | | | | | | 0.06 | 0.05 | | |
| (C) Fatty acid dihydrazide | (C-1) | part by mass | 0.016 | 0.03 | 0.05 | 0.055 | | | | 0.03 | | | |
| | (C-2) | part by mass | | | | | 0.012 | 0.04 | 0.06 | | 0.04 | 0.06 | 0.03 |
| | (C-3) | part by mass | | | | | | | | | | | 0.03 |
| Amount of formaldehyde emissions (dry atmosphere) | | μg/g | 0.009 | 0.008 | 0.009 | 0.010 | 0.008 | 0.006 | 0.006 | 0.023 | 0.021 | 0.060 | 0.055 |
| Amount of formaldehyde emissions (humid atmosphere) | | μg/g | 0.21 | 0.22 | 0.24 | 0.30 | 0.20 | 0.21 | 0.20 | 0.45 | 0.51 | 0.71 | 0.62 |
| Mold deposit property | 100shots | - | Good | Good | Good | Good | Good | Good | Good | Good | Good | Inferior | Good |
| | 500shots | - | Good | Good | Good | Good | Good | Good | Good | Poor | Poor | Inferior | Inferior |
| | 1000shots | - | Good | Good | Good | Poor | Good | Good | Good | Inferior | Inferior | Inferior | Inferior |

INDUSTRIAL APPLICABILITY

The polyacetal resin composition of the present disclosure has a small amount of formaldehyde emissions and a small amount of mold deposits, and therefore it can be suitably used, for example, in the fields of electrical and electronic

applications where high accuracy and good appearance are required, and automobile interior applications where reduction of volatile organic compounds is required.

## Claims

1. A polyacetal resin composition, comprising

100 parts by mass of (A) polyacetal resin, and
0.05 parts by mass to 5 parts by mass of (B) fatty acid monohydrazide, wherein
the (B) fatty acid monohydrazide comprises at least
(B1) one type of fatty acid monohydrazide having 18 to 42 carbon atoms represented by the following general formula (1), and
(B2) one type of fatty acid monohydrazide having 3 to 17 carbon atoms represented by the following general formula (1),

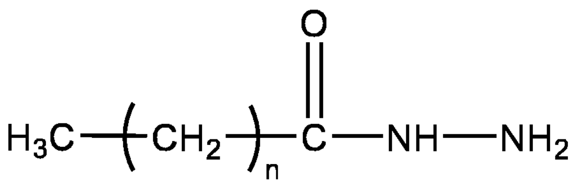

(1)

where n is an integer of 16 to 40 in a case of the component (B1), and n is an integer of 1 to 15 in a case of the component (B2).

2. The polyacetal resin composition according to claim 1,
wherein a mass ratio (B1):(B2) of the component (B1) to the component (B2) is 99.99:0.01 to 65:35.

3. The polyacetal resin composition according to claim 1 or 2, further comprising 0.01 parts by mass to 5 parts by mass of (C) fatty acid dihydrazide represented by the following general formula (2),

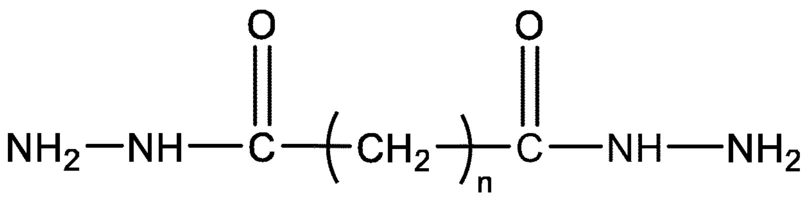

(2)

where n is an integer of 1 to 40.

4. The polyacetal resin composition according to claim 3,
wherein a mass ratio (B):(C) of the component (B) to the component (C) is 99:1 to 51:49.

5. The polyacetal resin composition according to any one of claims 1 to 4, wherein the component (B1) is stearic acid hydrazide.

6. The polyacetal resin composition according to any one of claims 1 to 5, wherein the component (B2) is palmitic acid hydrazide.

7. The polyacetal resin composition according to any one of claims 3 to 6, wherein the component (C) is at least one selected from the group consisting of adipic acid dihydrazide, sebacic acid dihydrazide, and dodecane diacid dihydrazide.

8. The polyacetal resin composition according to claim 7,
wherein the component (C) is either or both of sebacic acid dihydrazide and dodecane diacid dihydrazide.

**9.** The polyacetal resin composition according to claim 8, wherein the component (C) is sebacic acid dihydrazide.

**Patentansprüche**

**1.** Polyacetalharzzusammensetzung, umfassend

100 Massenteile (A) Polyacetalharz, und
0,05 Massenteile bis 5 Massenteile (B) Fettsäuremonohydrazid, worin
das (B) Fettsäuremonohydrazid mindestens umfasst

(B1) eine Art eines Fettsäuremonohydrazids mit 18 bis 42 Kohlenstoffatomen, dargestellt durch die folgende allgemeine Formel (1), und
(B2) eine Art eines Fettsäuremonohydrazids mit 3 bis 17 Kohlenstoffatomen, dargestellt durch die folgende allgemeine Formel (1),

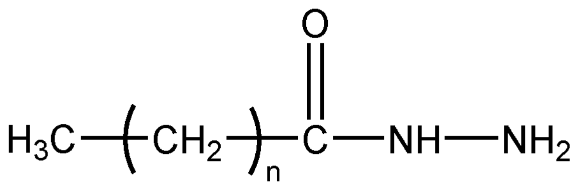

(1)

wobei n im Fall der Komponente (B1) eine ganze Zahl von 16 bis 40 ist, und n im Fall der Komponente (B2) eine ganze Zahl von 1 bis 15 ist.

**2.** Polyacetalharzzusammensetzung gemäß Anspruch 1, worin ein Massenverhältnis (B1):(B2) der Komponente (B1) zur Komponente (B2) 99,99:0,01 bis 65:35 beträgt.

**3.** Polyacetalharzzusammensetzung gemäß Anspruch 1 oder 2, ferner umfassend 0,01 Massenteile bis 5 Massenteile (C) Fettsäuredihydrazid, dargestellt durch die folgende allgemeine Formel (2),

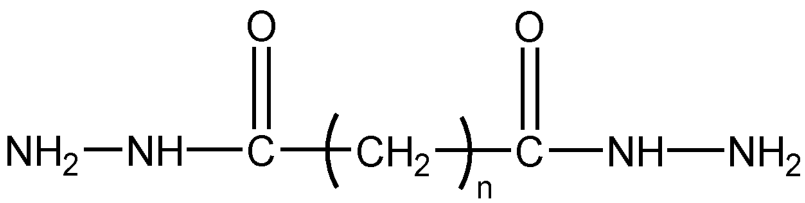

(2)

wobei n eine ganze Zahl von 1 bis 40 ist.

**4.** Polyacetalharzzusammensetzung gemäß Anspruch 3, worin ein Massenverhältnis (B):(C) der Komponente (B) zur Komponente (C) 99:1 bis 51:49 beträgt.

**5.** Polyacetalharzzusammensetzung gemäß einem der Ansprüche 1 bis 4, worin die Komponente (B1) Stearinsäurehydrazid ist.

**6.** Polyacetalharzzusammensetzung gemäß einem der Ansprüche 1 bis 5, worin die Komponente (B2) Palmitinsäurehydrazid ist.

**7.** Polyacetalharzzusammensetzung gemäß einem der Ansprüche 3 bis 6, worin die Komponente (C) mindestens eine ist, ausgewählt aus der Gruppe, bestehend aus Adipinsäuredihydrazid, Sebacinsäuredihydrazid und Dodecandisäuredihydrazid.

**8.** Polyacetalharzzusammensetzung gemäß Anspruch 7, worin die Komponente (C) entweder Sebacinsäuredihydrazid oder Dodecandisäuredihydrazid oder beide ist.

9. Polyacetalharzzusammensetzung gemäß Anspruch 8, worin die Komponente (C) Sebacinsäuredihydrazid ist.

**Revendications**

1. Composition de résine de polyacétal, comprenant

100 parties en masse de (A) résine de polyacétal, et
0,05 partie en masse à 5 parties en masse de (B) monohydrazide d'acide gras, dans laquelle
le (B) monohydrazide d'acide gras comprend au moins
(B1) un type de monohydrazide d'acide gras présentant de 18 à 42 atomes de carbone représenté par la formule générale suivante (1), et
(B2) un type de monohydrazide d'acide gras présentant de 3 à 17 atomes de carbone représenté par la formule générale suivante (1),

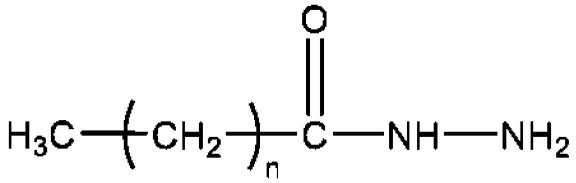

(1)

où n est un nombre entier de 16 à 40 dans un cas du composant (B1), et n est un nombre entier de 1 à 15 dans un cas du composant (B2).

2. Composition de résine de polyacétal selon la revendication 1, dans laquelle un ratio en masse (B1):(B2) du composant (B1) sur le composant (B2) est 99,99:0,01 à 65:35.

3. Composition de résine de polyacétal selon la revendication 1 ou la revendication 2, comprenant en outre 0,01 partie en masse à 5 parties en masse de (C) dihydrazide d'acide gras représenté par la formule générale suivante (2),

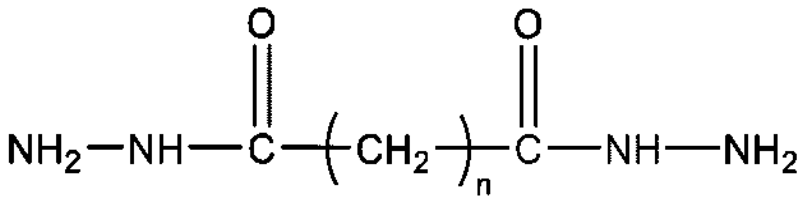

(2)

où n est un nombre entier de 1 à 40.

4. Composition de résine de polyacétal selon la revendication 3, dans laquelle un ratio en masse (B):(C) du composant (B) sur le composant (C) est 99:1 à 51:49.

5. Composition de résine de polyacétal selon l'une quelconque des revendications 1 à 4, dans laquelle le composant (B1) est l'hydrazide d'acide stéarique.

6. Composition de résine de polyacétal selon l'une quelconque des revendications 1 à 5, dans laquelle le composant (B2) est l'hydrazide d'acide palmitique.

7. Composition de résine de polyacétal selon l'une quelconque des revendications 3 à 6, dans laquelle le composant (C) est au moins un sélectionné dans le groupe consistant en le dihydrazide d'acide adipique, le dihydrazide d'acide sébacique, et le dihydrazide de diacide dodécane.

8. Composition de résine de polyacétal selon la revendication 7, dans laquelle le composant (C) est soit l'un ou l'autre soit les deux du dihydrazide d'acide sébacique et du dihydrazide de diacide dodécane.

**9.** Composition de résine de polyacétal selon la revendication 8, dans laquelle le composant (C) est le dihydrazide d'acide sébacique.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H04345648 A
- WO 2005033200 A
- JP 2012233129 A
- JP 2014009309 A
- JP 2010155972 A
- EP 2098569 A